# EUROPÄISCHE PATENTSCHRIFT

(11) **EP 2 125 622 B1**
(45) Veröffentlichungstag und Bekanntmachung des Hinweises auf die Patenterteilung: **13.09.2017**
(21) Anmeldenummer: 07857680.8
(22) Anmeldetag: 17.12.2007
(51) Int. Cl.: C09C 1/00, C09C 1/36, C01G 23/00

(54) **TITAN-, ZINK-, ZINN-, SELTENERD-, SOWIE WAHLWEISE ERDALKALI-OXIDE ENTHALTENDE FARBKÖRPER**
PIGMENTS CONTAINING TIN AND RARE EARTH ELEMENTS
PIGMENTS CONTENANT DES ÉLÉMENTS CÉRAMIQUES ET DES ÉLÉMENTS DES TERRES RARES

(30) Priorität: 12.01.2007 EP 07100489
(43) Veröffentlichungstag der Anmeldung: 02.12.2009
(73) Patentinhaber: BASF SE, 67056 Ludwigshafen am Rhein (DE)
(72) Erfinder: MRONGA, Norbert, 69221 Dossenheim (DE); BRAMNIK, Kirill, 68163 Mannheim (DE)
(86) Internationale Anmeldenummer: PCT/EP2007/064049
(87) Internationale Veröffentlichungsnummer: WO 2008/083897

(56) Entgegenhaltungen:
- EP-A- 0 113 229
- EP-A- 1 690 523

## Beschreibung

Die Erfindung betrifft Pigmente auf Basis von Titandioxid, Zinkoxid und Zinnoxiden enthaltend Seitenerdmetalloxide und/oder Erdalkalimetalloxide.

Farbkörper der Zusammensetzung (TiO₂)ₐ(ZnO)_{b}(SnO)_{c}(SnO₂)_{d} sind in der US 4,448,608 beschrieben. Die Kristallstruktur der Pigmente ist nicht bekannt. Im Röntgenpulverdiffraktogramm (Cu Kα-Strahlung) weisen die Farbkörper fünf Hauptreflexe bei 2 Θ (rel. Intensität) = 20,69° (10), 31,24° (100), 36,22° (20), 52,14° (22) und 62,03° (20) auf. Abhängig von den Molverhältnissen von a, b, c und d der Metalloxide werden Pigmente unterschiedlicher Farbe erhalten. Neben Gelb- und Orangefarbtönen sind auch grüne, braune und graue Farbtöne möglich. Bevorzugte Farbtöne sind orange und gelb. Für die Farbe ausschlaggebend ist der Anteil von Sn(II) (als SnO) im Kristall. Bevorzugte Zusammensetzungen für Orangepigmente weisen Zusammensetzungen auf mit a = 1 bis 3, b = 1, c = 1 und d = 0. Mit zunehmendem Gehalt an SnO₂ (d > 0) wird der Farbton in Richtung gelb verschoben. Wird der Anteil von SnO verringert, werden die Pigmente zunehmend heller und farbschwächer, bis schließlich ein weißes oder hellgraues Pigment resultiert.

EP 1 690 523 A offenbart Pigmente der Zusammensetzung (TiO₂)ₐSnO(ZnO)_{b}(SnO₂)_{c}, wobei a = 0,3 - 6,2, b = 0,04 - 6,2 und c = 0 - 7 ist, und deren Verwendung in kosmetischen Zubereitungen zur dekorativen Anwendung auf Haut oder Nägeln. Seltenerdmetalloxide oder Erdalkalimetalloxide sind in den Pigmenten nicht enthalten.

Für den Einsatz als Buntpigmente sind im allgemeinen Farbkörper mit hoher Farbbrillanz (Chroma) und hoher Helligkeit gewünscht. Daher werden Zusammensetzungen gesucht, die möglichst farbreine und helle Pigmente ergeben. Daneben ist eine hohe Farbstärke gewünscht. Pigmente mit hoher Farbstärke sind ergiebiger, da man weniger Pigment benötigt, um eine bestimmte Farbtiefe in einem Lack oder Kunststoff einzustellen.

In der US 4,448,608 werden zwei verschiedene Herstellverfahren für die Pigmente angegeben. Nach einem Herstellverfahren werden Salze der Elemente Titan, Zink und Zinn in Wasser unter Zusatz von Säure gelöst. In einer nichtoxidierenden, inerten Atmosphäre (z. B. Stickstoffatmosphäre) werden dann durch Zugabe von Alkalilauge die Hydroxide oder Oxidhydrate der Metalle ausgefiällt, filtriert, alkalifrei gewaschen, getrocknet und bei Temperaturen zwischen 800 und 1000 °C unter Stickstoff geglüht. Alle Prozessschritte müssen dabei in Inertgas-Atmosphäre durchgeführt werden, um eine Oxidation von Sn(11) zu Sn(IV) zu verhindern. Dem Glühen schließt sich ein Mahlprozess an, um entstandene Agglomerate zu zerkleinern.

Ein alternatives Herstellverfahren umfasst das trockene Mischen der Rohstoffe TiO₂, ZnO und SnO (gegebenenfalls auch SnO₂ Glühen der Mischung bei Temperaturen zwischen 800 und 1000 °C in Inertgas-Atmosphäre und Mahlen des erhaltenen Ofenklinkers.

Von wesentlicher Bedeutung für die Farbreinheit und Farbstärke ist eine möglichst homogene Durchmischung der einzelnen Komponenten vor dem Glühen. Bevorzugt ist daher das Herstellverfahren, bei dem eine optimale Durchmischung durch Fällung der Elemente in Form der Hydroxide beziehungsweise Oxidhydrate gewährleistet ist. Allerdings ist das Verfahren mit dem Nachteil behaftet, dass alle Verfahrensschritte unter vollständigem Sauerstoffausschluss durchgeführt werden müssen.

Aufgabe der vorliegenden Erfindung ist es, weitere helle, farbreine und farbstarke Pigmente bereitzustellen. Aufgabe ist es insbesondere, die Pigmente des Standes der Technik auf Basis von Titandioxid, Zinkoxid und Zinnoxiden hinsichtlich Helligkeit, Farbreinheit und Farbstärke zu verbessern.

Gelöst wird die Aufgabe durch Pigmente der empirischen Zusammensetzung

(TiO₂)ₐ(ZnO)_{b}(SnO)_{c}(SnO₂)_{d}(REₓOy)ₑ(EAO)_{f}(MᵤOᵥ)_{g}

worin
RE ein Metall der 3. Nebengruppe oder ein Seltenerdmetall,
EA ein Erdalkalimetall, und
M ein beliebiges weiteres Metall bedeuten, mit
a=0,8-3;b=0,5-1,3;c=0,5-1,3;d=0-0,5;e=0-0,3;f=0-0,3;g=0-0,1,
wobei e + f ≥ 0,01.

Überraschenderweise wurde gefunden, dass helle, farbreine und farbstarke Pigmente resultieren, wenn zu den bekannten Komponenten TiO₂, ZnO und SnO sowie gegebenenfalls auch SnO₂ Seltenerdmetalloxide und/oder Erdalkalimetalloxide hinzugefügt werden.

RE ist ein Metall der 3. Nebengruppe oder ein Seltenerdmetall. Im Einzelnen sind dies die Elemente Sc, Y, La, Ce, Pr, Nd, Sm, Eu, Gd, Tb, Dy, Ho, Er, Tm Yb und Lu. Diese können in den erfindungsgemäßen Pigmenten als rein zweiwertige Oxide REO, rein dreiwertige Oxide RE₂O₃ oder rein vierwertige Oxide REO₂ sowie als Oxide gemischter Oxidationsstufen, welche neben dem zweiwertigem Metall RE(II) auch das dreiwertige Metall RE(III) oder neben dem dreiwertigen Metall RE(III) auch das vierwertige Metall RE(IV) enthalten, vorkommen. Somit kann die stöchiometrische Zusammensetzung zwischen REO und RE₂O₃ beziehungsweise zwischen RE₂O₃ und REO₂ variieren, d. h. für x = 1 variiert y von 1 bis 2 in REₓO_{y}. So liegen die Elemente Yttrium und Lanthan in den erfindungsgemäßen Pigmenten im Allgemeinen als Y₂O₃ beziehungsweise La₂O₃ vor. Das Element Cer liegt im Allgemeinen als CeO₂ vor. Das Element Praseodym kann sowohl als Pr₂O₃ als auch als PrO₂ als auch in Form von Pr(III)/Pr(IV)-Mischoxiden vorliegen und beispielsweise die stöchiometrische Zusammensetzung Pr₆O₁₁ aufweisen. Weitere Mischoxide des Praseodyms sind Pr₁₂O₂₂, Pr₁₁O₂₀, Pr₁₀O₁₈, Pr₉O₁₆, Pr₈O₁₄, Pr₇O₁₂ und Pr₆0₁₀. Die Elemente Eu und Yb können auch als stabile zweiwertige Oxide EuO beziehungsweise YbO vorliegen.

Bevorzugte erfindungsgemäße Pigmente enthalten mindestens eines der Elemente Yttrium, Lanthan, Cer und Praseodym oder zwei oder mehrere dieser Elemente.

Die erfindungsgemäßen Pigmente können weiterhin ein Erdalkalimetall EA aufweisen. Bevorzugte Erdalkalimetalle sind Ca, Sr und Ba, weniger bevorzugt ist Mg.

In einer Ausführungsform der Erfindung ist e = 0,01 - 0,3 und f = 0,01 - 0,3, das heißt das Pigment enthält neben RE auch EA. EA ist bevorzugt ausgewählt aus Ca, Sr und Ba. In einer weiteren Ausführungsform ist e = 0,01 - 0,3 und f = 0, das heißt das Pigment enthält kein EA. In beiden Fällen ist RE bevorzugt ausgewählt aus Y, La, Ce und Pr. In einer weiteren Ausführungsform ist e = 0 und f = 0,01 - 0,3, das heißt das Pigment enthält kein RE.

Bevorzugt ist a = 1,0 - 3, b = 0,7 - 1,3 und c = 0,7 - 1,3.

Bevorzugt liegen e, f jeweils im Bereich von 0,02 - 0,15, besonders bevorzugt von 0,02 -0,125.

Die erfindungsgemäßen Pigmente können weitere Metalle M enthalten. Bevorzugte weitere Metalle M sind ausgewählt aus Zr, Al und Si, die im Allgemeinen als ZrO₂, Al₂O₃ oder SiO₂ oder als Mischoxide aus zwei oder mehr der genannten Metalle vorliegen können. Weniger bevorzugte Metalle M sind V, Nb, Mo, W, Sb, Bi und Pb.

Gegenstand der Erfindung sind auch Verfahren zur Herstellung der erfindungsgemä-ßen Pigmente.

Nach einem Verfahren werden die oxidischen Rohstoffe TiO₂, ZnO, SnO, gegebenenfalls SnO₂, REₓO_{y} und/oder EAO und gegebenenfalls MᵤOᵥ oder Vorläufer dieser Oxide als trockene Pulver vermischt, die Mischung bei Temperaturen zwischen 800 und 1100 °C in Inertgas-Atmosphäre geglüht und der erhaltene Ofenklinker gemahlen.

Durch die Trockensynthese bestehend aus den Einzelschritten Mischen aller Rohstoffe, Kalzinierung der Rohmischung und anschließender konventioneller Mahlung (Nassmahlung beziehungsweise Trockenmahlung) lassen sich die erfindungsgemäßen Pigmente auch im technischen Maßstab ohne besonderen Aufwand herstellen.

Anstelle der Oxide der genannten Elemente können auch Oxidvorläufer, die beim Erhitzen in Oxide umgewandelt werden, wie z. B. die Hydroxide, Carbonate, Oxidhydrate und basischen Carbonate der genannten Elemente, eingesetzt werden.

Im Allgemeinen wird Y als Y₂O₃ La als La₂O₃, Ce als CeO₂ und Pr als Pr₆O₁₁ zugegeben.

Alternativ können die erfindungsgemäßen Pigmente auch durch Lösen der Salze der Elemente Titan, Zink, Zinn, RE und gegebenenfalls AE in Wasser unter Zusatz von Säure in einer nichtoxidierenden, inerten Atmosphäre (z. B. Stickstoffatmosphäre), Ausfällen der Hydroxide oder Oxidhydrate von Titan, Zink, Zinn, RE und/oder EA durch Zugabe von Alkalilauge, Filtrieren, Waschen, Trocknen und Kalzinieren (Glühen) bei Temperaturen zwischen 800 und 1100 °C in Inertgas-Atmosphäre hergestellt werden. Bevorzugt werden die genannten Elemente in Form ihrer Chloride oder Nitrate gelöst.

Die Gegenwart der Zusatzelemente RE und/oder EA führt zu einer deutlichen Anhebung der Farbreinheit (Chroma), einer erheblichen Steigerung der Farbstärke und zu einer erheblichen Erhöhung der Helligkeit der Pigmente bei gleichzeitig auftretender leichter Farbverschiebung in Richtung gelb, verglichen mit Pigmenten der Formel (TiO₂)ₐ(ZnO)_{b}(SnO)_{c}(SnO₂)_{d}, die diese Zusatzelemente nicht enthalten. Durch den erfindungsgemäßen Anteil an Zusatzelementen RE und/oder EA in den Pigmenten werden hochbrillante, helle und farbstarke Pigmente erhalten.

Die erfindungsgemäßen Pigmente lassen sich in vielfältiger Weise als Farbmittel einsetzen. Bevorzugte Einsatzgebiete sind die Verwendung der Pigmente als Farbmittel zum Einfärben von Anstrichstoffen, Druckfarben, Tinten, Kunststoffen und Gummi. Anstrichstoffe sind wässrige oder lösemittelhaltige Lacke sowie Pulverlacke, in denen die erfindungsgemäßen Pigmente allein oder in Kombination mit Füllstoffen, Weiß-, Bunt- oder Schwarzpigmenten eingesetzt werden können. Als Bindemittel können alle im Lackbereich üblichen Bindemittel eingesetzt werden. Lacke, die mit den erfindungsgemäßen Pigmenten eingefärbt werden können, sind insbesondere:
- Ölbasierte Lacke (auf Basis von Leinöl oder Polyurethanölen),
- Cellulose-basierte Lacke (NC, CAB, CAP),
- Chlorkautschuk-basierte Lacke,
- Vinyllacke (auf Basis von PVC, PVDF, VC-Copolymer, Polyvinylacetat, Polyvinylesterdispersion, Polyvinylalkohol, Polyvinylacetal, Polvinylether, Polystyrol, Styrolcopolymere),
- Acrylat-Lacke,
- Alkyd-Lacke,
- Gesättigte Polyester-Lacke,
- Ungesättigte Polyester-Lacke,
- Polyurethan-Lacke (one pack, two pack),
- Epoxy-Lacke,
- Silicon-Lacke,
- Silicat-Lacke (auf Basis von Wasserglas, Alkylsilikaten).

Diese Lacksysteme sind im Einzelnen in D. Stoye, W. Freitag, Paints, Coatings and Solvents, Second Edition, 1998, Wiley-VCH, beschrieben.

Auch Kombinationen mit plättchenförmigen metallischen und/oder oxidischen Effektpigmenten sind möglich und führen zu interessanten winkelabhängigen Farbeffekten. Die erfindungsgemäßen Pigmente lassen sich auch vorteilhaft zur Einfärbung von üblichen Kunststoffen und Kunststoff-Blends, entweder allein oder in Kombination mit Weiß-, Bunt- und Schwarzpigmenten, und in Kombination mit allen gängigen Additiven und Stabilisatoren einsetzen. Als geeignete Kunststoffe können Hart- und Weich-PVC, Polyolefine sowie alle technischen Kunststoffe wie ABS, Polystyrol, Polyamid, Polyester, Polycarbonat, Polyetherketon, ferner Polyurethane und Rubbersysteme genannt werden. Die Pigmente können mittels gängiger Misch-, Blend-, Knet- und Extrusionstechniken eingearbeitet werden. Die Pigmente sind chemisch inert und sehr wetter- und temperaturbeständig, so dass sie gleichermaßen für Innen- und Außenanwendungen geeignet sind. In Weißaufhellungen zeigen die Pigmente gegenüber den in US 4,448,608 beschriebenen Pigmenten eine wesentlich höhere Farbstärke und sind damit deutlich ergiebiger.

Die Pigmente zeigen eine hohe Reflektivität im nahen Infrarot-Bereich und können damit vorteilhaft, allein oder im Gemisch mit weiteren geeigneten Pigmenten sowie Füllstoffen, in solchen Anstrichmitteln oder Kunststoffartikeln eingesetzt werden, welche bei Sonneneinstrahlung die Aufheizung von Innenräumen (z. B. von Gebäuden und Fahrzeugen) begrenzen sollen.

Für Mischungen mit Weißpigmenten kommen in Frage:
C.I. Pigment White 4, 5, 6 und 7.

Für Mischungen mit Schwarzpigmenten kommen in Frage:
C.I. Pigment Black 6, 7, 11, 26, 27, 28, 29, 30 und 32,
C.I. Pigment Brown 29 und 35.

Für Mischungen mit anorganischen Buntpigmenten kommen in Frage:
C.I. Pigment Yellow 42, 34, 53, 161, 162, 163, 164, 184 und 189,
C.I. Pigment Brown 24 und 37,
C.I. Pigment Red 101 und 104,
C.I. Pigment Blue 28 und 36,
C.I. Pigment Green 17 und 50.

Für Mischungen geeignete organische Buntpigmente stammen z. B. aus der Gruppe der Phthalocyaninpigmente, Indanthronpigmente, Anthrapyrimidinpigmente, Dioxazinpigmente, Chinacridonpigmente, Perylenpigmente, Pyrazolochinazolonpigmente, Isoindolinpigmente, Isoindolinonpigmente, Azopigmente, Diketopyrrolopyrrolpigmente, Chinophthalonpigmente und Anthrachinonpigmente. Als geeignete Beispiele für die einzelnen Klassen der organischen Pigmente seien genannt:
- Phthalocyaninpigmente:
   C.I. Pigment Blue 15, 15:1, 15:2, 15:3, 15:4, 15:6, 16,
   C.I. Pigment Green 7, 36;
- Indanthronpigmente:
   C.I. Pigment 60;
- Anthrapyrimidinpigmente:
   C.I. Pigment Yellow 108;
- Dioxazinpigmente:
   C.I. Pigment Violet 23;
- Chinacridonpigmente:
   C.I. Pigment Red 122 und 202,
   C.I. Pigment Violet 19;
- Perylenpigmente:
   C.I. Pigment Red 123, 178, 179 und 224;
- Pyrazolochinazolonpigmente:
   C.I. Pigment Orange 67 und C.I. Pigment Red 216;
- Isoindolinpigmente:
   C.I. Pigment Yellow 139 und 185,
   C.I. Pigment Orange 61 und 69,
   C.I. Pigment Red 257 und 260;
- Isoindolinonpigmente:
   C.I. Pigment Yellow 109, 110 und 173;
- Azopigmente:
   C.I. Pigment Yellow 2, 13, 62, 74, 83, 151, 154, 168 und 191,
   C.I. Pigment Orange 5, 13, 34, 36, 64 und 67,
   C.I. Pigment Red 1, 2, 3, 4, 5, 23, 48:1, 48:2, 48:3, 48:4, 49, 49:1, 51,51:1, 53, 53:1, 57:1, 58:2, 58:4, 112, 144, 146, 148, 166, 170, 184, 214, 220, 221 und 251;
- Diketopyrrolopyrrolpigmente:
   C.I. Pigment Orange 71 und 73,
   C.I. Pigment Red 254, 255, 264 und 272;
- Chinophthalonpigmente:
   C.I. Pigment Yellow 138 und 108;
- Anthrachinonpigmente:
   C.I. Pigment Red 177.

Die Pigmentmischungen enthalten 10 bis 99 Gew.-% der weiteren anorganischen und/oder organischen Pigmente und 1 bis 90 Gew.-% der erfindungsgemäßen Pigmente.

Als Beispiele für geeignete plättchenförmige Pigmente seien genannt:
- Metallpigmente:
   Aluminiumpigmente, Stahlpigmente, Zinkpigmente;
- beschichtete Metallpigmente:
   Eisenoxid-beschichtete Aluminiumpigmente, Titandioxid-beschichtete Aluminiumpigmente, Eisenoxid/Titanoxid-beschichtete Aluminiumpigmente, Aluminiumoxidbeschichtete Aluminiumpigmente, Aluminiumoxid/Eisenoxid-beschichtete Aluminiumpigmente, Siliciumoxid-beschichtete Aluminiumpigmente, Siliciumsuboxidbeschichtete Aluminiumpigmente, Siliziumoxid/Eisenoxid-beschichtete Aluminiumpigmente, Magnesiumfluorid/Chrom-beschichtete Aluminiumpigmente;
- beschichtete oxidische Pigmente:
   Titanoxid-beschichtete Glimmerpigmente, Eisenoxid-beschichtete Glimmerpigmente, Titanoxid/Eisenoxid-beschichtete Glimmerpigmente, Titanoxid-beschichtete Aluminiumoxidpigmente, Eisenoxid-beschichtete Aluminiumoxidpigmente, Titanoxid/Eisenoxid-beschichtete Aluminiumoxidpigmente, Titanoxid-beschichtete Glaspigmente, Eisenoxid-beschichtete Glaspigmente, Titanoxid/Eisenoxid-beschichtete Glaspigmente, Titanoxid-beschichtete SiO₂-Pigmente, Eisenoxid-beschichtete SiO₂-Pigmente, Titanoxid/Eisenoxid-beschichtete SiO₂-Pigmente, Eisenoxid/Siliziumoxid-beschichtete Glimmerpigmente, Titanoxid/Siliziumoxidbeschichtete Glimmerpigmente,
   Eisenoxid/Siliziumoxid-beschichtete Glaspigmente, Titanoxid/Siliziumoxidbeschichtete Glaspigmente, Eisenoxid/Siliziumoxid-beschichtete Aluminiumoxidpigmente, Titanoxid/Siliziumoxid-beschichtete Aluminiumoxidpigmente, mit organischen Farbstoffen und/oder organischen Pigmenten belegte Titanoxid-beschichtete Glimmerpigmente, mit organischen Farbstoffen und/oder organischen Pigmenten belegte Eisenoxid-beschichtete Glimmerpigmente;
- Bismutoxidchlorid-Pigmente;
- plättchenförmige Eisenoxid-Pigmente.

Die Pigmentmischungen enthalten 10 bis 99 Gew.-% der plättchenförmigen Pigmente und 1 bis 90 Gew.-% der erfindungsgemäßen Pigmente.

Die Erfindung wird durch die nachfolgenden Beispiele näher erläutert.

### Beispiele

Zur Herstellung der Pigmente werden die nachfolgend aufgeführten Metalloxide eingesetzt:
TiO₂: Anatas Kronos 1001
ZnO: von Riedel-de-Haen
SnO: 99%ig, ABCR GmbH & Co. KG
SnO₂: Tego RL von Elektro Thermit GmbH
La₂O₃: 99,98% von Fluka
CeO₂: > 99%ig von Fluka
Y₂O₃: von ABCR GmbH & Co. KG

Die Synthese der Pigmente erfolgt in einem rotierenden Quarzkolben mit 500 ml Inhalt, der sich in einem elektrisch beheizten Klappofen befindet. Der Kolben wird nach Einfüllen der Pigment-Rohmischung mit einem Stopfen verschlossen, der jeweils eine Öffnung für ein Gaszuleitungs- und ein Gasableitungsrohr sowie für ein Thermoelement aufweist. Über das Thermoelement wird die Temperatur des Klappofens geregelt. Durch das Gaseinleitungsrohr wird mit einer konstanten Dosierrate von 10 - 15 NI/h ein Stickstoffstrom durch den Kolben geleitet. Unter Drehen des Quarzkolbens wird eine halbe Stunde mit Stickstoff inertisiert, dann innerhalb von 1 h auf 900 °C aufgeheizt und 1 h bei dieser Temperatur gehalten. Anschließend wird unter Stickstoff bis auf Raumtemperatur abgekühlt. Das geglühte Pigment (Ofenklinker) wird anschließend gemahlen.

Zur Mahlung werden in einen Porzellanmahlbecher von 500 ml Fassungsvermögen 30 g Ofenklinker mit 60 g Trinkwasser und 250 g Mahlkugeln aus Glas (2 mm Durchmesser) eingefüllt und in einer Schwingmühle (Fa. Retsch) 10 min lang gemahlen. Die Mahlkugeln werden über ein Sieb von der Pigmentsuspension abgetrennt, die Suspension filtriert, das Pigment im Umlufttrockenschrank 1 h lang bei 160 °C getrocknet und anschließend 15 s im Braun-Mischer desagglomeriert.

Zur Beurteilung der färberischen Eigenschaften der Pigmente werden Pigmentanreibungen in PVC-Plastisol-Paste angefertigt, die durch 15-minütiges Erwärmen auf 160 °C im Umlufttrockenschrank ausgehärtet werden. Nach der Aushärtung wird das pigmentierte Plastisol farbmetrisch mit einem Spektralphotometer Optronik Multiflash vermessen. Die Pigmente werden im Vollton (nur Buntpigment) auf Farbton HGD, Chroma C* und Helligkeit L* und in Weißaufhellung, bestehend aus 1 Teil Buntpigment + 3 Teile Rutil Kronos 2056, => entsprechend einer Aufhellung von 1 : 4, auf Farbstärkeäquivalente (FAE) vermessen. Dabei hat das Vergleichsbeispiel 1 den willkürlich gesetzten Wert von FAE = 160. Ein FAE-Wert von 80 eines anderen Pigmentes bedeutet dann doppelte Farbstärke, ein FAE-Wert von 320 halbe Farbstärke. Als Vergleichspigment wird ein Produkt der Zusammensetzung (TiO₂)_{1,6}(ZnO)₁(SnO)₁ eingesetzt.

Zusammensetzung des Plastisols: 40 Gewichtsteile Dinonylphthalat (Palatinol^{®} N) und 60 Teile Gewichtsteile PVC (Vestolit^{®} 7012).

### Herstellung einer Vollton-Paste:

0,6 g Buntpigment werden mit 6 g Plastisol auf einem JEL 25.86 Tellerreiber (Fa. Engelsmann) mit 100 Umdrehungen unter 50 kg Gewicht dispergiert. Die entstandene Buntpigment-Paste wird mit einem Filmziehgerät (Fa. Erichsen) mittels Flachrakel in einer Filmdicke von 800 µm auf eine Glasplatte abgerakelt und nach kurzer Ablüftzeit 15 min lang bei 160 °C im Umlufttrockenschrank ausgehärtet.

### Herstellung einer Weißaufhellungspaste:

0,15 g Buntpigment und 0,45 g Rutilpigment werden mit 6 g Plastisol auf einem Engelsmann JEL 25.86 Tellerreiber mit 150 Umdrehungen unter 75 kg Gewicht dispergiert. Die entstandene Buntpigment-Weiß-Paste wird mit einem Filmziehgerät (Fa. Erichsen) mittels Flachrakel in einer Filmdicke von 800 µm auf eine Glasplatte abgerakelt und nach kurzer Ablüftzeit 15 min lang bei 160 °C im Umlufttrockenschrank ausgehärtet.

Nach dem Erkalten werden die Rakelabzüge, noch auf der Glasplatte liegend, auf der dem Glas abgewandten Seite farbmetrisch mit dem Multiflash-Spektralphotometer (Fa. Optronic) vermessen und die Berechnung der Farbstärke und der Farbwerte L* (Helligkeit), C* (Chroma = Farbreinheit) und HGD (Farbton) nach CIELab mit dem Programm BCSWIN (BASF Color System) berechnet. Ausgewertet werden die bei einem Messwinkel von 45° erhaltenen Daten.

### Vergleichsbeispiel 1

### Herstellung des Pigmentes (TiO₂)_{1,6}(ZnO)₁(SnO)₁

23,88 g TiO₂, 25,44 g SnO₁ und 15,2 g ZnO werden in eine 250 ml-Kunststoffflasche eingewogen mit 250 g Steatit-Kugeln (Durchmesser 8 mm) und in einem Intensiv-Mischer (Fa. Skandex) 30 min lang trocken gemischt. Die Rohmischung wird in den Quarzkolben überführt und anschließend unter Stickstoff (10 -15 l/h) in 1 h auf 900 °C erwärmt und bei 900 °C 1 h lang geglüht. Der Ofenklinker wird wie oben beschrieben in einer Porzellanschwingmühle gemahlen. Nach dem Trocknen und Desagglomerieren werden die Plastisol-Ausfärbungen angefertigt und farbmetrisch vermessen. Die koloristische Messung ergibt folgende Werte:

| **Molverhältnis** | | | **Aufhellung** | **Purton** | | |
|---|---|---|---|---|---|---|
| **TiO2** | **SnO** | **ZnO** | **FAE** | **HGD** | **C*** | **L*** |
| 1,6 | 1 | 1 | 160 | 59,0 | 79,2 | 54,1 |

### Vergleichsbeispiel 2

### Herstellung des Pigmentes (TiO₂)_{1,6}(ZnO)₁(SnO)_{0,8}

23,88 g TiO₂ 20,35 g SnO und 15,2 g ZnO werden eingewogen und wie in Vergleichsbeispiel 1 verarbeitet. Die koloristische Messung ergibt folgende Werte:

| **Molverhältnis** | | | **Aufhellung** | **Purton** | | |
|---|---|---|---|---|---|---|
| **TiO2** | **SnO** | **ZnO** | **FAE** | **HGD** | **C*** | **L*** |
| 1,6 | 0,8 | 1 | 184 | 60,2 | 72,6 | 54,5 |

Das Pigment ist merklich farbschwächer, etwas gelber und erheblich trüber als das Pigment nach Vergleichsbeispiel 1.

### Vergleichsbeispiele 3 bis 6

### Herstellung von Pigmenten (TiO₂)_{1,6}(ZnO)₁(SnO)₁₋ₓ(SnO₂)ₓ

Bei den Vergleichsbeispielen 3 - 6 wird ein Teil des SnO durch SnO₂ ersetzt. Die Synthese und Auswertung erfolgt wie in Beispiel 1. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **SnO₂** | **ZnO** | **TiO₂** | **SnO** | **SnO₂** | **ZnO** | **FAE** | **HGD** | **C*** | **L*** |
| Vgl.-bsp. 3 | 23,88 | 24,14 | 1,41 | 15,2 | 1,6 | 0,95 | 0,05 | 1 | 154 | 59,7 | 81,0 | 55,0 |
| Vgl.-bsp. 4 | 23,88 | 22,87 | 2,82 | 15,2 | 1,6 | 0,9 | 0,1 | 1 | 154 | 61,3 | 76,5 | 55,2 |
| Vgl.-bsp. 5 | 23,88 | 21,6 | 4,22 | 15,2 | 1,6 | 0,85 | 0,15 | 1 | 162 | 61,1 | 80,7 | 57,5 |
| Vgl.-bsp. 6 | 23,88 | 20,33 | 5,63 | 15,2 | 1,6 | 0,8 | 0,2 | 1 | 169 | 62,7 | 79,0 | 59,9 |

Durch den teilweisen Ersatz von SnO durch SnO₂ werden die Pigmente etwas gelbstichiger und etwas heller. Die Farbstärke ist bei 5 beziehungsweise 10 Mol-% SnO₂ etwas höher als ohne SnO₂-Ersatz und fällt bei höherem SnO₂-Anteil ab.

### Beispiele 1 bis 7

### Herstellung von Pigmenten (TiO₂)ₐ(ZnO)_{b}(SnO)_{c}(La₂O₃)ₑ

In den Beispielen 1 - 7 wird, verglichen mit dem Vergleichsbeispiel 1, ein Teil des SnO durch La₂O₃ ersetzt. Die Synthese und Auswertung erfolgt wie in Beispiel 1 beschrieben. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **La₂O₃** | **ZnO** | **TiO₂** | **SnO** | **La₂O₃** | **ZnO** | **FAE** | **HGD** | **C*** | **L*** |
| Beispiel 1 | 23,88 | 24,81 | 0,76 | 15,2 | 1,6 | 0,975 | 0,0125 | 1 | 132 | 61,6 | 79,5 | 56,2 |
| Beispiel 2 | 23,88 | 24,17 | 1,52 | 15,2 | 1,6 | 0,95 | 0,025 | 1 | 108 | 64,1 | 81,5 | 58,1 |
| Beispiel 3 | 23,88 | 23,54 | 2,28 | 15,2 | 1,6 | 0,925 | 0,0375 | 1 | 100 | 64,1 | 83,4 | 58,6 |
| Beispiel 4 | 23,88 | 22,9 | 3,04 | 15,2 | 1,6 | 0,9 | 0,05 | 1 | 109 | 64,7 | 84,6 | 63,5 |
| Beispiel 5 | 23,88 | 21,62 | 4,56 | 15,2 | 1,6 | 0,85 | 0,075 | 1 | 103 | 64,2 | 85,9 | 63,1 |
| Beispiel 6 | 23,88 | 20,99 | 5,33 | 15,2 | 1,6 | 0,825 | 0,0875 | 1 | 119 | 63,5 | 83,5 | 60,5 |
| Beispiel 7 | 23,88 | 20,35 | 6,09 | 15,2 | 1,6 | 0,8 | 0,1 | 1 | 124 | 66,6 | 77,7 | 60,6 |

Durch zunehmenden Ersatz von SnO durch La₂O₃ werden die Pigmente gelbstichiger. Bis zu einem Anteil von 0,075 Mol La₂O₃ pro 1,6 Mol TiO₂ nehmen die Farbstärke, die Farbreinheit und insbesondere die Helligkeit der Pigmente ganz erheblich zu, bei noch höherem Anteil La₂O₃ verlieren die Pigmente wieder etwas an Farbstärke, Farbreinheit und Helligkeit.

Das Röntgenpulverdiffraktogramm der Zusammensetzung gemäß Beispiel 7 zeigt die Lage der fünf Hauptreflexe nahezu unverändert gegenüber dem kein La₂O₃ enthaltenden Vergleichspigment.

### Beispiele 8 - 11

### Herstellung von Pigmenten (TiO₂)ₐ(ZnO)_{b}(SnO)_{c}(CeO2)ₑ

In den Beispielen 8 - 11 wird, verglichen mit dem Vergleichsbeispiel 1, ein Teil des SnO durch CeO₂ ersetzt. Die Synthese und Auswertung erfolgt wie in Beispiel 1. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **CeO₂** | **ZnO** | **TiO₂** | **SnO** | **CeO₂** | **ZnO** | **FAE** | **HGD** | **C*** | **L*** |
| Beispiel 8 | 23,88 | 24,79 | 0,8 | 15,2 | 1,6 | 0,975 | 0,025 | 1 | 93 | 64,0 | 85,8 | 57,9 |
| Beispiel 9 | 23,88 | 24,16 | 1,61 | 15,2 | 1,6 | 0,95 | 0,05 | 1 | 93 | 64,7 | 85,0 | 59,3 |
| Beispiel 10 | 23,88 | 23,53 | 2,41 | 15,2 | 1,6 | 0,925 | 0,075 | 1 | 95 | 64,7 | 84,5 | 59,7 |
| Beispiel 11 | 23,88 | 22,9 | 3,22 | 15,2 | 1,6 | 0,9 | 0,1 | 1 | 95 | 65,1 | 83,0 | 59,3 |

Der teilweise Ersatz von SnO durch CeO₂ macht die Pigmente gelbstichiger, erheblich reiner, heller und erheblich farbstärker als das Pigment nach Vergleichsbeispiel 1. Dieser Effekt ist bei allen CeO₂-Anteile etwa gleichermaßen gegeben.

### Beispiel 12

### Herstellung eines Pigmentes (TiO₂)ₐ(ZnO)_{b}(SnO)_{c}(La₂O₃)ₑ(CeO₂)ₑ

In Beispiel 12 wird ein Teil des SnO durch eine Kombination von La₂O₃ und CeO₂ ersetzt. Die Synthese und Auswertung erfolgt wie in Beispiel 1. Die Tabelle zeigt die Mengen der eingesetzten Rohstoffe und die Ergebnisse der koloristischen Prüfungen.

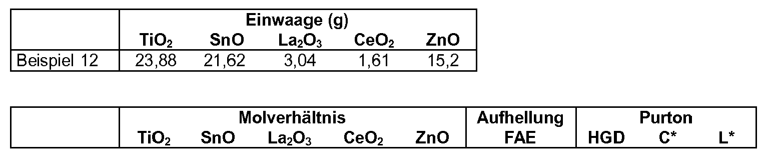

Der teilweise Ersatz von SnO durch La₂O₃ und CeO₂ macht das Pigment gelbstichiger, erheblich reiner, deutlich heller und erheblich farbstärker als das Pigment nach dem Vergleichsbeispiel 1.

### Beispiel 13

### Herstellung eines Pigmentes (TiO₂)ₐ(ZnO)_{b}(SnO)_{c}(Y₂O₃)ₑ

In Beispiel 13 wird ein Teil des SnO durch Y₂O₃ ersetzt. Die Synthese und Auswertung erfolgt wie in Beispiel 1. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **Y₂O₃** | **ZnO** | **TiO₂** | **SnO** | **Y₂O₃** | **ZnO** | **FAE** | **HGD** | **C*** | **L*** |
| Beispiel 13 | 23,88 | 24,17 | 1,06 | 15,2 | 1,6 | 0,95 | 0,025 | 1 | 97 | 63,4 | 83,4 | 56,7 |

Der teilweise Ersatz von SnO durch Y₂O₃ macht das Pigment gelbstichiger, deutlich reiner, etwas heller und erheblich farbstärker als das Pigment nach Vergleichsbeispiel 1.

### Beispiel 14

### Herstellung eines Pigmentes (TiO₂)ₐ(ZnO)_{b}(SnO)_{c}(SnO₂)_{d}(La₂O₃)ₑ

In Beispiel 14 wird ein Teil des SnO durch eine Kombination von La₂O₃ und SnO₂ ersetzt. Die Synthese und Auswertung erfolgt wie in Beispiel 1. Die Tabelle zeigt die Mengen der eingesetzten Rohstoffe und die Ergebnisse der koloristischen Prüfungen.

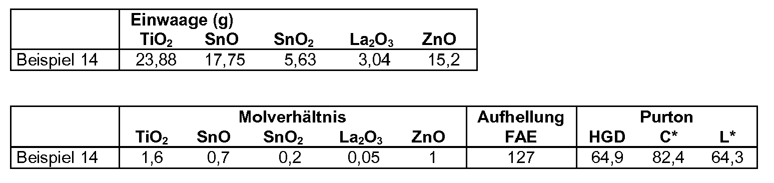

Der teilweise Ersatz von SnO durch SnO₂ und La₂O₃ und macht das Pigment gelbstichiger, merklich reiner, erheblich heller und merklich farbstärker als die Pigmente nach dem Vergleichsbeispiel 2.

### Beispiel 15

### Herstellung eines Pigmentes (TiO₂)ₐ(ZnO)_{b}(SnO)_{c}(La₂O₃)ₑ

In Beispiel 15 wird, verglichen mit Vergleichsbeispiel 1, zusätzlich La₂O₃ zugesetzt. Die Synthese und Auswertung erfolgt wie in Beispiel 1. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **La₂O₃** | **ZnO** | **TiO₂** | **SnO** | **La₂O₃** | **ZnO** | **FAE** | **HGD** | **C*** | **L*** |
| Beispiel 15 | 23,88 | 25,44 | 4,56 | 15,2 | 1,6 | 1 | 0,075 | 1 | 89 | 65,1 | 82,4 | 57,4 |

Der Zusatz von La₂O₃ zur Basis-Rezeptur des Vergleichsbeispiels 1 macht das Pigment gelbstichiger, deutlich reiner, etwas heller und erheblich farbstärker als das Pigment nach Vergleichsbeispiel 1.

### Beispiele 16 und 17

### Herstellung von Pigmenten (TiO₂)_{1,6}(ZnO)₁(SnO)₁₋ₓ(Pr₆O₁₁)_{y}

In den Beispielen 16 und 17 wird ein Teil des SnO durch Pr₆O₁₁ ersetzt. Die Synthese und Auswertung erfolgt wie in Beispiel 1 beschrieben. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **Pr₆O₁₁** | **ZnO** | **TiO₂** | **SnO** | **Pr₆O₁₁** | **ZnO** | **FAE** | **HGD** | **C*** | **L*** |
| Beispiel 16 | 23,88 | 24,16 | 1,592 | 15,2 | 1,6 | 0,95 | 0,008 | 1 | 94 | 65,6 | 79,8 | 46,5 |
| Beispiel 17 | 23,88 | 21,62 | 4,78 | 15,2 | 1,6 | 0,85 | 0,025 | 1 | 103 | 63,6 | 85,2 | 60,3 |

Der teilweise Ersatz von SnO durch Pr₆O₁₁ macht die Pigmente gelbstichiger und erheblich farbstärker als das Pigment nach Vergleichsbeispiel 1. Das Pigment in Beispiel 16 ist merklich dunkler als Vergleichsbeispiel 1, während das Pigment in Beispiel 17 deutlich heller und reiner ist als Vergleichsbeispiel 1.

### Beispiele 18 bis 21

### Herstellung von Pigmenten (TiO₂)_{1,6}(ZnO)₁(SnO)_{0,9}(EAO)_{0,1}

Bei den Beispielen 18 bis 21 wird ein Teil des SnO durch Erdalkali-Verbindungen ersetzt, die sich beim Kalzinieren in die entsprechenden Erdalkali-Oxide (MeO) umsetzen. Die Synthese und Auswertung erfolgt wie in Beispiel 1 beschrieben. Die Tabelle zeigt die Mengen der eingesetzten Rohstoffe und die Ergebnisse der koloristischen Prüfungen.

| | | **Einwaage (g)** | | | | **Molverhältnis** | | | | **Aufhellung** | **Purton** | | |
|---|---|---|---|---|---|---|---|---|---|---|---|---|---|
| | **EAX=** | **TiO₂** | **SnO** | **EAX** | **ZnO** | **TiO₂** | **SnO** | **EAO** | **ZnO** | **FAE** | **HGD** | **C*** | **L*** |
| Beispiel 18 | MgCO₃ | 23,88 | 22,9 | 1,75 | 15,2 | 1,6 | 0,9 | 0,1 | 1 | 144 | 63,0 | 72,8 | 54,1 |
| Beispiel 19 | Ca(OH)₂ | 23,88 | 22,9 | 1,44 | 15,2 | 1,6 | 0,9 | 0,1 | 1 | 75 | 66,8 | 83,1 | 58,8 |
| Beispiel 20 | Sr(OH)₂x8H₂O | 23,88 | 22,9 | 4,97 | 15,2 | 1,6 | 0,9 | 0,1 | 1 | 84 | 68,6 | 86,6 | 64,2 |
| Beispiel 21 | Ba(OH)₂x8H₂O | 23,88 | 22,9 | 5,9 | 15,2 | 1,6 | 0,9 | 0,1 | 1 | 104 | 65,8 | 85,3 | 62,6 |

Die koloristische Bewertung der hergestellten Pigmente zeigt einen deutlichen Unterschied zwischen Magnesium einerseits und seinen höheren Homologen andererseits. Während Magnesium das Pigment deutlich trüber als Vergleichsbeispiel 1 macht, bewirken Kalzium, Strontium und Barium gegenüber Vergleichsbeispiel 1 eine erhebliche Veränderung in Richtung gelber, reiner, hellerer und farbstärkerer Pigmente.

### Beispiele 22 und 23

### Herstellung von Pigmenten (TiO₂)_{1,6}(ZnO)₁(SnO)₁(EAO)_{0,1}

In den Beispielen 22 und 23 werden, verglichen mit der Stöchiometrie des Vergleichsbeispiels 1, zusätzlich Anteile an Erdalkalimetall-Verbindungen zugesetzt, die sich beim Kalzinieren in die entsprechenden Erdalkalimetall-Oxide (EAO) umsetzen. Die Synthese und Auswertung erfolgt wie in Beispiel 1. Die Tabelle zeigt die Mengen der eingesetzten Rohstoffe und die Ergebnisse der koloristischen Prüfungen.

| | | **Einwaage (g)** | | | | **Molverhältnis** | | | | **Aufhellung** | **Purton** | | |
|---|---|---|---|---|---|---|---|---|---|---|---|---|---|
| | **EAX=** | **TiO₂** | **SnO** | **EAX** | **ZnO** | **TiO₂** | **SnO** | **EAO** | **ZnO** | **FAE** | **HGD** | **C*** | **L*** |
| Beispiel 22 | MgCO₃ | 23,88 | 25,44 | 1,75 | 15,2 | 1,6 | 1 | 0,1 | 1 | 128 | 63,8 | 78,2 | 55,8 |
| Beispiel 23 | Ca(OH)₂ | 23,88 | 25,44 | 1,44 | 15,2 | 1,6 | 1 | 0,1 | 1 | 74 | 66,6 | 83,7 | 57,5 |

Wie im Beispiel 18 bewirkt ein Anteil Magnesium in der Rezeptur eine Verschlechterung der Farbreinheit (C*) gegenüber Vergleichsbeispiel 1, wohingegen die Gegenwart von Kalzium zu einer deutlichen Steigerung von Farbreinheit, Helligkeit und der Farbstärke führt.

### Beispiel 24

### Herstellung eines Pigmentes (TiO₂)_{1,6}(ZnO)₁(SnO)_{0,9}(La₂O₃)_{0,05}(CaO)_{0,1}

In dem Beispiel 24 wird ein Teil des SnO durch La₂O₃ ersetzt und zusätzlich ein Anteil CaO zugegeben. Die Synthese und Auswertung erfolgt analog zu Beispiel 1 beschrieben. Die Tabelle zeigt die Mengen der eingesetzten Rohstoffe und die Ergebnisse der koloristischen Prüfungen.

| | **Einwaage (g)** | | | | | **Molverhältnis** | | | | | **Aufhellung** | **Purton** | | |
|---|---|---|---|---|---|---|---|---|---|---|---|---|---|---|
| | **TiO₂** | **SnO** | **La₂O₃** | **Ca(OH)₂ x8H₂O** | **ZnO** | **TiO₂** | **SnO** | **La₂O₃** | **CaO** | **ZnO** | **FAE** | **HGD** | **C*** | **L*** |
| Beispiel 24 | 23,88 | 22,9 | 3,04 | 1,44 | 15,2 | 1,6 | 0,9 | 0,05 | 0,1 | 1 | 84 | 65,7 | 86,7 | 61,6 |

Die Zugabe von La₂O₃ und CaO führt zu erheblich höherer Farbstärke, erheblich höherer Reinheit und erheblich höherer Helligkeit gegenüber Vergleichsbeispiel 1.

### Beispiele 25 bis 28 und Vergleichsbeispiele 3 bis 6

### Herstellung von Pigmenten (TiO₂)ₓ(ZnO)₁(SnO)_{0,85}(La₂O₃)_{0,075} und (TiO₂)ₓ(ZnO)₁(SnO)₁(La₂O₃)_{0,075}

In den Beispielen 25 bis 28 und den Vergleichsbeispielen 3 bis 6 wird ein unterschiedlicher Anteil Titandioxid eingesetzt, jeweils mit und ohne La₂O₃-Zusatz. Die Synthese und Auswertung erfolgt analog zu Beispiel 1. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **La₂O₃** | **ZnO** | **TiO₂** | **SnO** | **La₂O₃** | **ZnO** | **FAE** | **HGD** | **C*** | **L*** |
| Vgl.-bsp. 3 | 14,93 | 25,44 | | 15,2 | 1 | 1 | | 1 | 156 | 68,0 | 63,4 | 51,9 |
| Beispiel 25 | 14,93 | 25,44 | 4,56 | 15,2 | 1 | 1 | 0,075 | 1 | 130 | 76,0 | 61,8 | 55,0 |
| Vgl.-bsp. 4 | 17,91 | 25,44 | | 15,2 | 1,2 | 1 | | 1 | 143 | 65,2 | 68,7 | 51,6 |
| Beispiel 26 | 17,91 | 21,62 | 4,56 | 15,2 | 1,2 | 0,85 | 0,075 | 1 | 119 | 70,5 | 67,5 | 55,4 |
| Vgl.-bsp. 5 | 20,88 | 25,44 | | 15,2 | 1,4 | 1 | | 1 | 160 | 60,0 | 77,3 | 53,3 |
| Beispiel 27 | 20,88 | 21,62 | 4,56 | 15,2 | 1,4 | 0,85 | 0,075 | 1 | 105 | 65,9 | 82,6 | 60,0 |
| Vgl.-bsp. 6 | 37,31 | 25,44 | | 15,2 | 2,5 | 1 | | 1 | 185 | 60,3 | 72,1 | 54,8 |
| Beispiel 28 | 37,31 | 25,44 | 4,56 | 15,2 | 2,5 | 1 | 0,075 | 1 | 115 | 65,0 | 74,7 | 59,0 |

Die koloristische Bewertung der hergestellten Pigmente zeigt bei allen eingesetzten Titandioxid-Anteilen einen deutlichen Unterschied zwischen La₂O₃-freien und La₂O₃-haltigen Produkten. Im Allgemeinen werden die Pigmente durch den La₂O₃-Zusatz gelbstichiger, reiner, heller und farbstärker. Beispiele 25 und 26 zeigen, dass bei einem Titandioxid-Anteil von 1,2 und kleiner durch den La₂O₃-Zusatz Helligkeit und Farbstärke verbessert werden, wohingegen das Chroma etwas zurückgeht.

### Beispiele 29 bis 31 und Vergleichsbeispiele 7 bis 9

### Herstellung von Pigmenten (TiO₂)_{1,6}(ZnO)₁(SnO)_{z}(La₂O₃)_{0,075}

In den Beispielen 29 bis 31 und den Vergleichsbeispielen 7 bis 9 wird ein unterschiedlicher Anteil Zinnoxid eingesetzt, jeweils mit und ohne La₂O₃-Zusatz. Die Synthese und Auswertung erfolgt analog zu Beispiel 1. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **La₂O₃** | **ZnO** | **TiO₂** | **SnO** | **La₂O₃** | **ZnO** | **FAE** | **HGD** | **C*** | **L*** |
| Vgl.-bsp. 7 | 23,88 | 16,53 | | 15,2 | 1,6 | 0,65 | | 1 | 184 | 61,6 | 71,2 | 58,1 |
| Beispiel 29 | 23,88 | 16,53 | 4,56 | 15,2 | 1,6 | 0,65 | 0,075 | 1 | 138 | 65,0 | 73,4 | 59,5 |
| Vgl.-bsp. 8 | 23,88 | 20,35 | | 15,2 | 1,6 | 0,8 | | 1 | 184 | 60,2 | 72,6 | 54,5 |
| Beispiel 30 | 23,88 | 20,35 | 4,56 | 15,2 | 1,6 | 0,8 | 0,075 | 1 | 103 | 65,6 | 78,3 | 59,0 |
| Vgl.-bsp. 9 | 23,88 | 30,53 | | 15,2 | 1,6 | 1,2 | | 1 | 151 | 60,7 | 77,6 | 50,1 |
| Beispiel 31 | 23,88 | 30,53 | 4,56 | 15,2 | 1,6 | 1,2 | 0,075 | 1 | 80 | 68,0 | 79,7 | 56,7 |

Die koloristische Bewertung der hergestellten Pigmente zeigt bei allen eingesetzten Zinnoxid-Anteilen einen deutlichen Unterschied zwischen La₂O₃-freien und La₂O₃-haltigen Produkten. Durch den La₂O₃-Zusatz werden die Pigmente gelbstichiger, reiner, heller und farbstärker.

### Beispiele 32 und 33 und Vergleichsbeispiele 10 und 11

### Herstellung von Pigmenten (TiO₂)_{1,6}(ZnO)_{y}(SnO)₁(La₂O₃)_{0,075}

In den Beispielen 32 und 33 und den Vergleichsbeispielen 10 und 11 wird ein unterschiedlicher Anteil Zinkoxid eingesetzt, jeweils mit und ohne La₂O₃-Zusatz. Die Synthese und Auswertung erfolgt in analoger Weise wie in Beispiel 1 beschrieben. Die Tabelle zeigt die Mengen der eingesetzten Rohstoffe und die Ergebnisse der koloristischen Prüfungen.

| | **Einwaage (g)** | | | | **Molverhältnis** | | | | **Aufhellung** | **Purton** | | |
|---|---|---|---|---|---|---|---|---|---|---|---|---|
| | **TiO₂** | **SnO** | **La₂O₃** | **ZnO** | **TiO₂** | **SnO** | **La₂O₃** | **ZnO** | **FAE** | **HGD** | **C*** | **L*** |
| Vgl.-bsp. 10 | 23,88 | 25,44 | | 12,92 | 1,6 | 1 | | 0,85 | 160 | 63,1 | 69,1 | 51,5 |
| Beispiel 32 | 23,88 | 25,44 | 4,56 | 12,92 | 1,6 | 1 | 0,075 | 0,85 | 95 | 64,5 | 84,3 | 58,3 |
| Vgl.-bsp. 11 | 23,88 | 25,44 | | 18,24 | 1,6 | 1 | | 1,2 | 122 | 60,4 | 75,0 | 51,9 |
| Beispiel 33 | 23,88 | 25,44 | 4,56 | 18,24 | 1,6 | 1 | 0,075 | 1,2 | 89 | 67,5 | 77,2 | 57,8 |

Die Zugabe von La₂O₃ führt zu erheblich höherer Farbstärke, erheblich höherer Reinheit und erheblich höherer Helligkeit gegenüber den Pigmenten ohne Lanthanzusatz.

## Patentansprüche

1. Pigment der empirischen Zusammensetzung
(TiO₂)ₐ(ZnO)_{b}(SnO)_{c}(SnO₂)_{d}(REₓO_{y})ₑ(EAO)_{f}(MᵤOᵥ)_{g}
worin
RE ein Metall der 3. Nebengruppe oder ein Seltenerdmetall,
EA ein Erdalkalimetall, und
M ein beliebiges weiteres Metall bedeuten, mit
a=0,8-3;b=0,5-1,3;c=0,5-1,3;d=0-0,5;e=0-0,3;f=0-0,3; g=0-0,1,
wobei e + f ≥ 0,01.

2. Pigment nach Anspruch 1, **dadurch gekennzeichnet, dass** RE ausgewählt ist aus den Elementen Yttrium, Lanthan, Cer und Praseodym und deren Gemischen.

3. Pigment nach Anspruch 1 oder 2, **dadurch gekennzeichnet, dass** EA ausgewählt ist aus den Elementen Calcium, Strontium und Barium und deren Gemischen.

4. Pigment nach einem der Ansprüche 1 bis 3, **dadurch gekennzeichnet, dass** a = 1,0-3; b=0,7-1,3;c=0,7-1,3.

5. Pigment nach einem der Ansprüche 1 bis 4, **dadurch gekennzeichnet, dass** f = 0 ist.

6. Pigment nach einem der Ansprüche 1 bis 4, **dadurch gekennzeichnet, dass** e und f jeweils 0,01 bis 0,3 sind.

7. Pigment nach einem der Ansprüche 1 bis 4, **dadurch gekennzeichnet, dass** e = 0 ist.

8. Verfahren zur Herstellung eines Pigments, wie in einem der Ansprüche 1 bis 7 definiert, bei dem TiO₂, ZnO, SnO, gegebenenfalls SnO₂, REₓO_{y} und/oder EAO und gegebenenfalls MᵤOᵥ oder deren Vorläuferverbindungen als trockene Pulver vermischt, das Pulvergemisch bei Temperaturen zwischen 800 und 1100 °C unter Inertgas-Atmosphäre geglüht und der erhaltene Ofenklinker gemahlen wird.

9. Verfahren nach Anspruch 8, **dadurch gekennzeichnet, dass** Y als Y₂O₃ La als La₂O₃ Ce als CeO₂ und Pr als Pr₆O₁₁ eingesetzt wird.

10. Pigmentmischungen enthaltend
a) 1 bis 90 Gew.-% eines Pigments gemäß einem der Ansprüche 1 bis 7, und
b) 10 bis 99 Gew.-% eines oder mehrerer weiterer anorganischer oder organischer Pigmente und/oder eines oder mehrerer plättchenförmiger metallischer oder oxidischer Effektpigmente.

11. Verwendung von Pigmenten, wie in einem der Ansprüche 1 bis 7 definiert, als Farbmittel zum Einfärben von Anstrichstoffen, Druckfarben, Tinten, Kunststoffen und Gummi.

## Claims

1. A pigment of empirical composition
(TiO₂)ₐ(ZnO)_{b}(SnO)_{c}(SnO₂)_{d}(REₓO_{y})ₑ(AEO)_{f}(MᵤOᵥ)_{g}
wherein
RE is a metal from transition group 3 or a rare earth metal,
AE is an alkaline earth metal, and
M is any other metal, where
a = 0.8 - 3; b = 0.5 - 1.3; c = 0.5 - 1.3; d = 0 - 0.5; e = 0 - 0.3; f = 0 - 0.3; and
g = 0 - 0.1,
and e + f ≥ 0.01.

2. The pigment according to claim 1, wherein RE is selected from the elements yttrium, lanthanum, cerium and praseodymium and mixtures thereof.

3. The pigment according to claim 1 or 2, wherein AE is selected from the elements calcium, strontium and barium and mixtures thereof.

4. The pigment according to any one of claims 1 to 3, wherein a = 1.0 - 3; b = 0.7 - 1.3; and c = 0.7 - 1.3.

5. The pigment according to any one of claims 1 to 4, wherein f is = 0.

6. The pigment according to any one of claims 1 to 4, wherein e and f are each 0.01 to 0.3.

7. The pigment according to any one of claims 1 to 4, wherein e is = 0.

8. A method of producing a pigment as defined in any one of claims 1 to 7 which comprises mixing TiO₂, ZnO, SnO, optionally SnO₂, REₓO_{y} and/or AEO and optionally MᵤOᵥ or precursor compounds thereof as dry powders, calcining the powder mixture at temperatures between 800 and 1100°C under an inert gas atmosphere, and grinding the resulting furnace clinker.

9. The method according to claim 8, wherein Y is used as Y₂O₃, La as La₂O₃, Ce as CeO₂, and Pr as Pr₆O₁₁.

10. A pigment mixture comprising
a) 1% to 90% by weight of a pigment according to any one of claims 1 to 7 and
b) 10% to 99% by weight of one or more further organic or inorganic pigments and/or one or more platelet-shaped metallic or oxidic effect pigments.

11. The use of a pigment as defined in any one of claims 1 to 7 as a colorant for coloring paints, printing inks, liquid inks, plastics, and rubber.

## Revendications

1. Pigment de la composition empirique
(TiO₂)ₐ(ZnO)_{b}(SnO)_{c}(SnO2)_{d}(REₓO_{y})ₑ(EAO)_{f}(MᵤOᵥ)_{g}
dans laquelle
RE signifie un métal du 3^{e} groupe de transition ou un métal de terres rares,
EA signifie un métal alcalino-terreux et
M signifie un autre métal quelconque, avec
a = 0, 8 à 3 ; b = 0,5 à 1,3 ; c = 0,5 à 1,3 ; d = 0 à 0,5 ; e = 0 à 0, 3 ; f = 0 à 0,3 ; g = 0 à 0, 1,
avec e + f ≥ 0,01.

2. Pigment selon la revendication 1, **caractérisé en ce que** RE est choisi parmi les éléments yttrium, lanthane, cérium et praséodyme et leurs mélanges.

3. Pigment selon la revendication 1 ou 2, **caractérisé en ce qu'**EA est choisi parmi les éléments calcium, strontium et baryum et leurs mélanges.

4. Pigment selon l'une quelconque des revendications 1 à 3, **caractérisé en ce qu'**a = 1,0 0 à 3 ; b = 0,7 à 1,3 ; c = 0,7 à 1, 3.

5. Pigment selon l'une quelconque des revendications 1 à 4, **caractérisé en ce que** f = 0.

6. Pigment selon l'une quelconque des revendications 1 à 4, **caractérisé en ce qu'**e et f valent chacun 0,01 à 0, 3.

7. Pigment selon l'une quelconque des revendications 1 à 4, **caractérisé en ce qu'**e = 0.

8. Procédé de fabrication d'un pigment tel que défini dans l'une quelconque des revendications 1 à 7, selon lequel du TiO₂, du ZnO, du SnO, éventuellement du SnO₂, du REₓO_{y} et/ou de l'EAO et éventuellement du MᵤOᵥ ou leurs composés précurseurs sont mélangés sous la forme de poudres sèches, le mélange de poudres est recuit à des températures comprises entre 800 et 1100 °C sous une atmosphère de gaz inerte, et le clinker de four obtenu est broyé.

9. Procédé selon la revendication 8, **caractérisé en ce qu'**Y est utilisé sous la forme Y₂O₃, La sous la forme La₂O₃, Ce sous la forme CeO₂ et Pr sous la forme Pr₆O₁₁.

10. Mélanges de pigments, contenant :
a) 1 à 90 % en poids d'un pigment selon l'une quelconque des revendications 1 à 7, et
b) 10 à 99 % en poids d'un ou de plusieurs autres pigments inorganiques ou organiques et/ou d'un ou de plusieurs pigments à effet métalliques ou oxydiques en forme de plaque.

11. Utilisation de pigments, tels que définis dans l'une quelconque des revendications 1 à 7, en tant qu'agent colorant pour la coloration de peintures, d'encres d'impression, d'encres, de plastiques et de caoutchoucs.
